# EUROPEAN PATENT SPECIFICATION

(11) **EP 3 049 642 B1**
(45) Date of publication and mention of the grant of the patent: **25.04.2018**
(21) Application number: 14848284.7
(22) Date of filing: 14.08.2014
(51) Int. Cl.: F01D 25/18, F01D 25/20, F02C 7/06, F04D 29/26, F01M 1/02, F02C 7/32, F01M 11/04, F04D 29/053, F04D 29/063, F04D 29/32, F16N 7/40, F01M 1/12

(54) **GAS TURBINE ENGINE WITH SPLIT LUBRICATION SYSTEM**
GASTURBINENMOTOR MIT GETEILTEM SCHMIERSYSTEM
MOTEUR À TURBINE À GAZ AVEC SYSTÈME DE LUBRIFICATION FRACTIONNÉ

(30) Priority: 26.09.2013 US 201361882651 P
(43) Date of publication of application: 03.08.2016
(73) Proprietor: United Technologies Corporation, Farmington, CT 06032 (US)
(72) Inventor: JAMES, Denman H., West Hartford, CT 06119 (US)
(74) Representative: Hull, James Edward
(86) International application number: PCT/US2014/050981
(87) International publication number: WO 2015/047577

(56) References cited:
- US-A1- 2009 123 274
- US-A1- 2010 212 281
- US-A1- 2010 294 597
- US-A1- 2010 296 947
- US-A1- 2011 155 508

## Description

### BACKGROUND

This application relates to a lubrication system that uses a two pump configuration to optimize lubricant delivery in a gas turbine engine.

Gas turbine engines include engine oil pump systems that have generally been powered by an accessory gearbox. Typically, the accessory gearbox is driven by a high rotor, i.e., high speed shaft, of the gas turbine engine. A typical oil pump system includes an oil supply tank, a supply pump, and a scavenging pump that returns scavenged oil to the supply tank. The oil supply pump is generally sized to meet maximum flow conditions, and all remaining operating points then receive whatever flow the system provides at the "off design" condition. This results in excessive oil flow at many operating points. Excessive oil flow causes churning and pumping of the oil, which contribute to engine parasitic losses.

In certain system configurations, valves have been used in an attempt to divert the excess oil flow back to the supply tank. Another proposed solution to address excess oil flow is the use of a variable displacement oil pump. These configurations are not desirable due to cost and weight trade-off issues. Patent Application US2010/294597 and US2010/212281 disclose such system configurations.

### SUMMARY

In a featured embodiment, a lubrication system for use in a gas turbine engine has a first engine shaft configured to rotate at a first speed. A second engine shaft is configured to rotate at a second speed that is faster than the first speed. A first pump is configured to be driven by the first shaft. A second pump is configured to be driven by the second shaft. The first and second pumps provide lubricant to an engine operating system. Capacities of the first and second pumps are optimized to minimize an amount of lubricant supplied to the engine operating system based on the associated first and second speeds.

In another embodiment according to the previous embodiment, a lubricant supply tank provides lubricant to both the first and second pumps.

In another embodiment according to any of the previous embodiments, the lubricant is oil.

In another embodiment according to any of the previous embodiments, at least one scavenge pump returns scavenged lubricant from the engine operating system to the supply tank.

In another embodiment according to any of the previous embodiments, the at least one scavenge pump is driven by the first engine shaft.

In another embodiment according to any of the previous embodiments, the at least one scavenge pump is driven by the second engine shaft.

In another embodiment according to any of the previous embodiments, the at least one scavenge pump has at least a first scavenge pump driven by the first engine shaft and a second scavenge pump driven by the second engine shaft.

In another embodiment according to any of the previous embodiments, the first and second pumps are non-variable pumps that operate without a control system.

In another embodiment according to any of the previous embodiments, a control system monitors engine operating conditions for lubrication requirements as a function of mechanical speed and calculated loads, and controls the first and/or second pumps to optimize the amount of lubricant supplied to the engine operating system based on the engine operating condition.

In another featured embodiment, a gas turbine engine has a low shaft that interconnects a fan, a low pressure compressor, and a low pressure turbine. A high shaft interconnects a high pressure compressor and high pressure turbine. A combustor is arranged between the high pressure compressor and the high pressure turbine. A first pump is configured to be driven by the low shaft. A second pump is configured to be driven by the high shaft. The first and second pumps provide lubricant to an engine operating system. Capacities of the first and second pumps are optimized to minimize an amount of lubricant supplied to the engine operating system based on the associated first and second speeds.

In another embodiment according to previous embodiment, the low shaft is connected to the fan through a geared architecture.

In another embodiment according to any of the previous embodiments, a lubricant supply tank provides lubricant to both the first and second pumps.

In another embodiment according to any of the previous embodiments, the lubricant is oil.

In another embodiment according to any of the previous embodiments, at least one scavenge pump returns scavenged lubricant from the engine operating system to the supply tank.

In another embodiment according to any of the previous embodiments, the at least one scavenge pump is driven by the low or high shaft.

In another embodiment according to any of the previous embodiments, the at least one scavenge pump has at least a first scavenge pump driven by the low shaft and a second scavenge pump driven by the high shaft.

In another embodiment according to any of the previous embodiments, a control system monitors engine operating conditions for lubrication requirements as a function of mechanical speed and calculated loads, and controls the first and/or second pumps to optimize the amount of lubricant supplied to the engine operating system based on the engine operating condition.

In another embodiment according to any of the previous embodiments, a method for operating a lubrication system in a gas turbine engine includes the steps of providing a first engine shaft configured to rotate at a first speed, a second engine shaft configured to rotate at a second speed that is faster than the first speed. A first pump is configured to be driven by the first shaft, and a second pump is configured to be driven by the second shaft. Lubricant is delivered to an engine operating system via the first and second pumps by optimizing capacities of the first and second pumps to minimize an amount of lubricant supplied to the engine operating system based on the associated first and second speeds.

The foregoing features and elements may be combined in any combination without exclusivity, unless expressly indicated otherwise. These and other features may be best understood from the following drawings and specification.

### BRIEF DESCRIPTION OF THE DRAWINGS

Figure 1 schematically shows a gas turbine engine.
Figure 2 shows a schematic diagram of a lubrication system as used in the engine of Figure 1.
Figure 3 shows a graph of delivered oil flow (pounds per minute) vs. required oil flow (pounds per minute).

### DETAILED DESCRIPTION

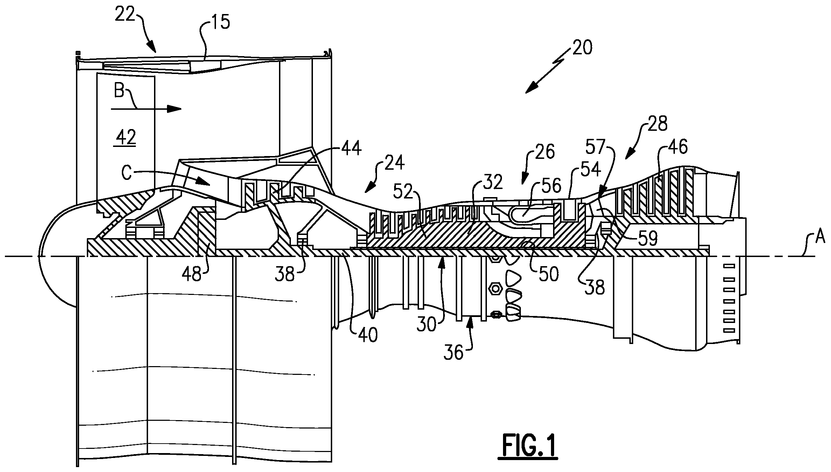

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 10,668 m (35,000 feet). The flight condition of 0.8 Mach and 10,668 m (35,000 feet), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 350.5 m/s (1150 ft / second).

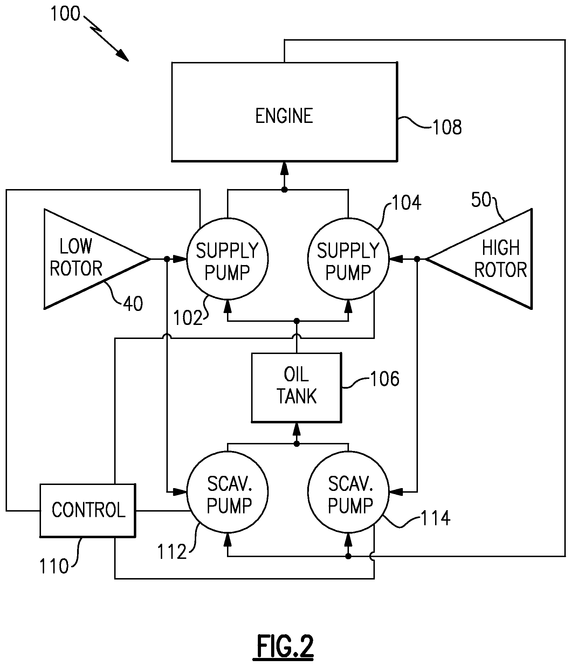

In the example shown in Figure 2, a lubrication system 100 for the gas turbine engine 20 includes a first supply pump 102, a second supply pump 104, and a lubricant supply tank 106. In one example, the lubricant comprises oil; however, other types of lubricant can also be used. The lubricant supply tank 106 supplies lubricant to the first and second supply pumps 102, 104.

The first supply pump 102 is driven by the low rotor/low shaft 40 and the second supply pump 104 is driven by the high rotor/high shaft 50. As discussed above, the low shaft 40 rotates at a slower speed than the high shaft 50. The first 102 and second 104 supply pumps provide lubrication to an engine operating system 108. The speeds of the low and high rotors are driven by a thermodynamic cycle and the "matching" between the two spools. Thus, the rotor speeds, while coupled, vary over a flight envelope and a ratio between the two speeds changes as a function of flight condition (altitude, throttle setting, day type, etc). Capacities of the first and second pumps are optimized to minimize the amount of lubricant supplied to the engine operating system.

In one example, an optional control system 110 monitors engine operating conditions for lubrication requirements which may be a function of mechanical speed and calculated loads, and controls the first 102 and/or second 104 pumps to optimize an amount of lubricant supplied to the engine operating system 108 based on the engine operating condition. In other words, the optional embodiment that includes the control system 110 identifies the current operating condition and then controls the first 102 and/or second 104 pumps to supply the optimal amount of lubricant for that identified operating condition. For example, if the engine operating condition is a low speed condition, only the low speed pump, that is, the first supply pump 102, may be needed to supply the desired amount of lubrication. Thus, the system 100 provides a better match of engine lubricant flow requirements with a delivered amount of lubricant to reduce engine parasitic losses previously caused by pumping and churning of an excessive amount of supplied lubricant.

First 112 and second 114 scavenging pumps return lubricant from the engine operating system 108 to the supply tank 106. The first scavenging pump 112 is driven by the low shaft 40 and the second scavenging pump 114 is driven by the high shaft 50. The control system 110, when included in an optional embodiment, may also control operation of the first 112 and/or second 114 scavenging pumps.

As discussed above, the system 100 uses two supply pumps 102, 104, one driven by the low shaft 40 and one drive by the high shaft 50. The pump sizes can be selected through a mathematical optimization process to minimize the overall engine lubricant flow in excess to requirements, or with the objective of minimizing pump size. This results in a configuration that utilizes the inherent speed differences between the shafts 40, 50 at different operating points, as determined by engine cycle selection, to minimize the excess lubricant delivery to the engine. The use of these pumps, which deliver flow proportionally to their rotational speed, will then allow optimization of the total delivered capacity given the two drive rotor lapse rates.

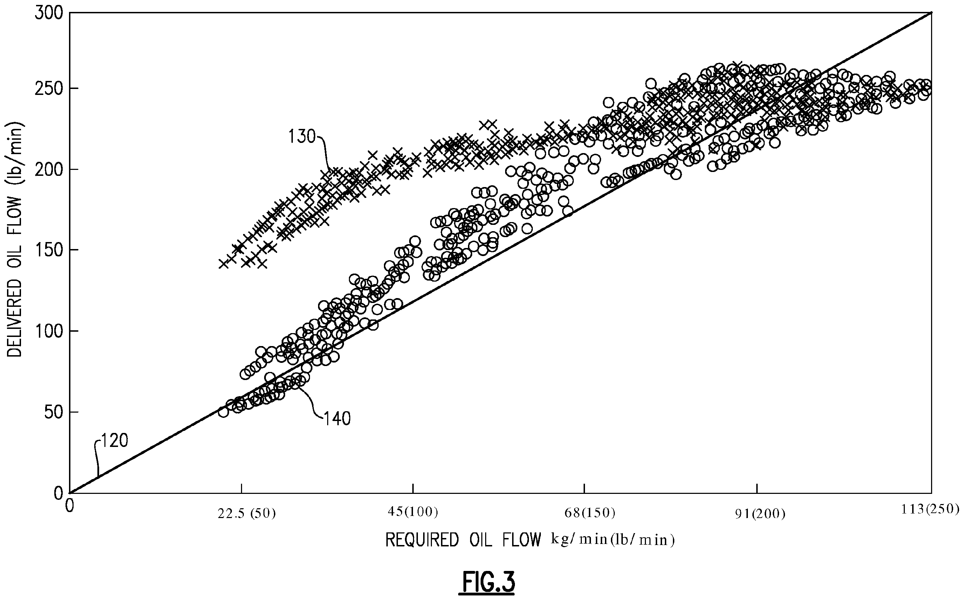

Figure 3 shows an example of delivered oil flow (pounds per minute) vs. required oil flow (pounds per minute). The ideal flow line is identified at 120. The area identified at 130 shows a single pump configuration where the single pump is driven by the high shaft 50. The area identified at 140 shows the two pump system, i.e. a split system, which optimizes lubricant delivery by using a first supply pump 102 driven by the low shaft 40 and a second supply pump 104 driven by the high shaft 50. As shown, the spilt system provides a flow that closely matches the ideal flow line 120.

Thus, the benefits of this split, i.e. two pump, system in conjunction with optimized lubricant delivery, are reduced pump size and weight, as well as reduced engine parasitic power extraction. The inherent differences in shaft speed are used to provide an optimized lubricant flow without the weight and cost of a variable capacity pump. This system, in the configuration without the additional control system provides the significant benefit of a variable speed pump placed on a single drive shaft with two fixed capacity pumps operating on separate shafts without the weight, complexity and cost of a controlled system and/or variable capacity pumps.

Although an embodiment of this invention has been disclosed, a worker of ordinary skill in this art would recognize that certain modifications would come within the scope of this disclosure. For that reason, the following claims should be studied to determine the true scope and content of this disclosure.

## Claims

1. A lubrication system (100) for use in a gas turbine engine (20) comprising:
a first engine shaft (40) configured to rotate at a first speed;
a second engine shaft (50) configured to rotate at a second speed that is faster than the first speed;
a first pump (102) configured to be driven by the first shaft (40); and
a second pump (104) configured to be driven by the second shaft (50), the first and second pumps (102, 104) providing lubricant to an engine operating system (108), and **characterized in that** capacities of the first and second pumps (102, 104) are optimized to minimize an amount of lubricant supplied to the engine operating system (108) based on the associated first and second speeds.

2. A gas turbine engine (20) comprising:
a low shaft (40) that interconnects a fan (42), a low pressure compressor (44), and a low pressure turbine (46);
a high shaft (50) that interconnects a high pressure compressor (52) and high pressure turbine (54);
a combustor (26) arranged between the high pressure compressor (52) and the high pressure turbine (54);
a first pump (102) configured to be driven by the low shaft (40); and
a second pump (104) configured to be driven by the high shaft (50), the first and second pumps (102, 104) providing lubricant to an engine operating system (108), and **characterized in that** capacities of the first and second pumps (102, 104) are optimized to minimize an amount of lubricant supplied to the engine operating system (108) based on the associated first and second speeds.

3. The gas turbine engine (20) according to claim 2, wherein the low shaft (40) is connected to the fan (42) through a geared architecture (48).

4. The lubrication system (100) or gas turbine engine (20) according to claim 1, 2 or 3, including a lubricant supply tank (106) that provides lubricant to both the first and second pumps (102, 104).

5. The lubrication system (100) or gas turbine engine (20) according to claim 4, wherein the lubricant is oil.

6. The lubrication system (100) or gas turbine engine (20) according to claim 4 or 5, including at least one scavenge pump (112, 114) that returns scavenged lubricant from the engine operating system (108) to the supply tank (106).

7. The lubrication system (100) according to claim 6, wherein the at least one scavenge pump (112, 114) is driven by the first engine shaft (40).

8. The lubrication system (100) according to claim 6, wherein the at least one scavenge pump (112, 114) is driven by the second engine shaft (50).

9. The lubrication system (100) according to claim 6, wherein the at least one scavenge pump (112, 114) comprises at least a first scavenge pump (112) driven by the first engine shaft (40) and a second scavenge pump (114) driven by the second engine shaft (50).

10. The gas turbine engine (20) according to claim 6, wherein the at least one scavenge pump (112, 114) is driven by the low or high shaft (40, 50).

11. The gas turbine engine (20) according to claim 6, wherein the at least one scavenge pump (112, 114) comprises at least a first scavenge pump (112) driven by the low shaft (40) and a second scavenge pump (114) driven by the high shaft (50).

12. The lubrication system (100) or gas turbine engine (20) according to any preceding claim, wherein the first and second pumps (102, 104) are non-variable pumps that operate without a control system (110).

13. The lubrication system (100) or gas turbine engine (20) according to any of claims 1 to 11, including a control system (110) that monitors engine operating conditions for lubrication requirements as a function of mechanical speed and calculated loads, and controls the first and/or second pumps (102, 104) to optimize the amount of lubricant supplied to the engine operating system (108) based on the engine operating condition.

14. A method for operating a lubrication system (100) in a gas turbine engine (20) comprising the steps of:
providing a first engine shaft (40) configured to rotate at a first speed, a second engine shaft (50) configured to rotate at a second speed that is faster than the first speed, a first pump (102) configured to be driven by the first shaft (40), and a second pump (104) configured to be driven by the second shaft (50); and
delivering lubricant to an engine operating system (108) via the first and second pumps (102, 104) providing by optimizing capacities of the first and second pumps (102, 104) to minimize an amount of lubricant supplied to the engine operating system (108) based on the associated first and second speeds.

## Patentansprüche

1. Schmiersystem (100) zur Verwendung in einem Gasturbinenmotor (20), umfassend:
eine erste Motorwelle (40), die konfiguriert ist, um sich mit einer ersten Geschwindigkeit zu drehen;
eine zweite Motorwelle (50), die konfiguriert ist, um sich mit einer zweiten Geschwindigkeit zu drehen, die schneller ist als die erste Geschwindigkeit;
eine erste Pumpe (102), die konfiguriert ist, um von der ersten Welle (40) angetrieben zu werden; und
eine zweite Pumpe (104), die konfiguriert ist, um von der zweiten Welle (50) angetrieben zu werden, wobei die erste und die zweite Pumpe (102, 104) ein Motorbetriebssystem (108) mit Schmiermittel versorgen und **dadurch gekennzeichnet, dass** die Kapazitäten der ersten und zweiten Pumpe (102, 104) optimiert sind, um eine Schmiermittelmenge zu minimieren, die dem Motorbetriebssystem (108) basierend auf der zugehörigen ersten und zweiten Geschwindigkeit zugeführt wird.

2. Gasturbinenmotor (20), umfassend:
eine untere Welle (40), die ein Gebläse (42), einen Niederdruckverdichter (44) und eine Niederdruckturbine (46) miteinander verbindet;
eine obere Welle (50), die einen Hochdruckverdichter (52) und eine Hochdruckturbine (54) miteinander verbindet;
einen Verbrenner (26), der zwischen dem Hochdruckverdichter (52) und der Hochdruckturbine (54) angeordnet ist;
eine erste Pumpe (102), die konfiguriert ist, um durch die untere Welle (40) angetrieben zu werden; und
eine zweite Pumpe (104), die konfiguriert ist, um durch die obere Welle (50) angetrieben zu werden, wobei die erste und die zweite Pumpe (102, 104) ein Motorbetriebssystem (108) mit Schmiermittel versorgen und **dadurch gekennzeichnet, dass** die Kapazitäten der ersten und zweiten Pumpe (102, 104) optimiert sind, um eine Schmiermittelmenge zu minimieren, die dem Motorbetriebssystem (108) basierend auf der zugehörigen ersten und zweiten Geschwindigkeit zugeführt wird.

3. Gasturbinenmotor (20) nach Anspruch 2, wobei die untere Welle (40) über eine Getriebearchitektur (48) mit dem Gebläse (42) verbunden ist.

4. Schmiersystem (100) oder Gasturbinenmotor (20) nach Anspruch 1, 2 oder 3, mit einem Schmiermittelversorgungstank (106), der Schmiermittel sowohl für die erste als auch die zweite Pumpe (102, 104) bereitstellt.

5. Schmiersystem (100) oder Gasturbinenmotor (20) nach Anspruch 4, wobei das Schmiermittel Öl ist.

6. Schmiersystem (100) oder Gasturbinenmotor (20) nach Anspruch 4 oder 5, aufweisend mindestens eine Rückförderpumpe (112, 114), die gereinigtes Schmiermittel von dem Motorbetriebssystem (108) zu dem Versorgungstank (106) zurückführt.

7. Schmiersystem (100) nach Anspruch 6, wobei die mindestens eine Rückförderpumpe (112, 114) durch die erste Motorwelle (40) angetrieben wird.

8. Schmiersystem (100) nach Anspruch 6, wobei die mindestens eine Rückförderpumpe (112, 114) durch die zweite Motorwelle (50) angetrieben wird.

9. Schmiersystem (100) nach Anspruch 6, wobei die mindestens eine Rückförderpumpe (112, 114) mindestens eine von der ersten Motorwelle (40) angetriebene erste Rückförderpumpe (112) und eine von der zweiten Motorwelle (50) angetriebene zweite Rückförderpumpe (114) umfasst.

10. Gasturbinenmotor (20) nach Anspruch 6, wobei die mindestens eine Rückförderpumpe (112, 114) durch die untere oder obere Welle (40, 50) angetrieben wird.

11. Gasturbinenmotor (20) nach Anspruch 6, wobei die mindestens eine Rückförderpumpe (112, 114) mindestens eine von der unteren Welle (40) angetriebene erste Rückförderpumpe (112) und eine von der oberen Welle (50) angetriebene zweite Rückförderpumpe (114) umfasst.

12. Schmiersystem (100) oder Gasturbinenmotor (20) nach einem der vorhergehenden Ansprüche, wobei die erste und die zweite Pumpe (102, 104) nicht-variable Pumpen sind, die ohne ein Steuersystem (110) arbeiten.

13. Schmiersystem (100) oder Gasturbinenmotor (20) nach einem der Ansprüche 1 bis 11, aufweisend ein Steuersystem (110), das Motorbetriebsbedingungen für Schmieranforderungen als eine Funktion mechanischer Geschwindigkeit und berechneter Lasten überwacht und die erste und/oder zweite Pumpe (102, 104) steuert, um die dem Motorbetriebssystem (108) zugeführte Schmiermittelmenge basierend auf dem Motorbetriebszustand zu optimieren.

14. Verfahren zum Betreiben eines Schmiersystems (100) in einem Gasturbinenmotor (20) umfassend die folgenden Schritte:
Bereitstellen einer ersten Motorwelle (40), die konfiguriert ist, um mit einer ersten Geschwindigkeit zu drehen, einer zweiten Motorwelle (50), die konfiguriert ist, um mit einer zweiten Geschwindigkeit zu drehen, die schneller als die erste Geschwindigkeit ist, einer ersten Pumpe (102), die konfiguriert ist, um durch die erste Welle (40) angetrieben zu werden, und einer zweiten Pumpe (104), die konfiguriert ist, um durch die zweite Welle (50) angetrieben zu werden; und
Liefern von Schmiermittel an ein Motorbetriebssystem (108) über die erste und die zweite Pumpe (102, 104) durch Optimieren der Kapazitäten der ersten und zweiten Pumpe (102, 104), um eine Schmiermittelmenge zu minimieren, die dem Motorbetriebssystem (108) basierend auf der zugehörigen ersten und zweiten Geschwindigkeit zugeführt wird.

## Revendications

1. Système de lubrification (100) destiné à être utilisé dans un moteur à turbine à gaz (20) comprenant :
un premier arbre de moteur (40) configuré pour tourner à une première vitesse ;
un second arbre de moteur (50) configuré pour tourner à une seconde vitesse qui est plus rapide que la première vitesse ;
une première pompe (102) configurée pour être entraînée par le premier arbre (40) ; et
une seconde pompe (104) configurée pour être entraînée par le second arbre (50), les première et seconde pompes (102, 104) fournissant un lubrifiant à un système d'exploitation de moteur (108), et
**caractérisé en ce que** les capacités des première et seconde pompes (102, 104) sont optimisées pour minimiser une quantité de lubrifiant fournie au système d'exploitation de moteur (108) sur la base des première et seconde vitesses associées.

2. Moteur à turbine à gaz (20) comprenant :
un arbre inférieur (40) qui relie un ventilateur (42), un compresseur basse pression (44) et une turbine basse pression (46) ;
un arbre supérieur (50) qui relie un compresseur haute pression (52) et une turbine haute pression (54) ;
une chambre de combustion (26) agencée entre le compresseur haute pression (52) et la turbine haute pression (54) ;
une première pompe (102) configurée pour être entraînée par l'arbre inférieur (40) ; et
une seconde pompe (104) configurée pour être entraînée par l'arbre supérieur (50), les première et seconde pompes (102, 104) fournissant un lubrifiant à un système d'exploitation de moteur (108) et
**caractérisé en ce que** les capacités des première et seconde pompes (102, 104) sont optimisées pour minimiser une quantité de lubrifiant fournie au système d'exploitation de moteur (108) sur la base des première et seconde vitesses associées.

3. Moteur à turbine à gaz (20) selon la revendication 2, dans lequel l'arbre inférieur (40) est relié au ventilateur (42) à travers une architecture à engrenages (48).

4. Système de lubrification (100) ou moteur à turbine à gaz (20) selon la revendication 1, 2 ou 3, comprenant un réservoir d'alimentation en lubrifiant (106) qui fournit un lubrifiant aux première et seconde pompes (102, 104).

5. Système de lubrification (100) ou moteur à turbine à gaz (20) selon la revendication 4, dans lequel le lubrifiant est de l'huile.

6. Système de lubrification (100) ou moteur à turbine à gaz (20) selon la revendication 4 ou 5, comprenant au moins une pompe de récupération (112, 114) qui renvoie le lubrifiant récupéré depuis le système d'exploitation de moteur (108) vers le réservoir d'alimentation (106).

7. Système de lubrification (100) selon la revendication 6, dans lequel l'au moins une pompe de récupération (112, 114) est entraînée par le premier arbre de moteur (40).

8. Système de lubrification (100) selon la revendication 6, dans lequel l'au moins une pompe de récupération (112, 114) est entraînée par le second arbre de moteur (50).

9. Système de lubrification (100) selon la revendication 6, dans lequel l'au moins une pompe de récupération (112, 114) comprend au moins une première pompe de récupération (112) entraînée par le premier arbre de moteur (40) et une seconde pompe de récupération (114) entraînée par le second arbre de moteur (50).

10. Moteur à turbine à gaz (20) selon la revendication 6, dans lequel l'au moins une pompe de récupération (112, 114) est entraînée par l'arbre inférieur ou supérieur (40, 50).

11. Moteur à turbine à gaz (20) selon la revendication 6, dans lequel l'au moins une pompe de récupération (112, 114) comprend au moins une première pompe de récupération (112) entraînée par l'arbre inférieur (40) et une seconde pompe de récupération (114) entraînée par l'arbre supérieur (50).

12. Système de lubrification (100) ou moteur à turbine à gaz (20) selon une quelconque revendication précédente, dans lequel les première et seconde pompes (102, 104) sont des pompes non variables qui fonctionnent sans système de commande (110) .

13. Système de lubrification (100) ou moteur à turbine à gaz (20) selon l'une quelconque des revendications 1 à 11, comprenant un système de commande (110) qui surveille les conditions d'exploitation de moteur pour les exigences de lubrification en fonction de la vitesse mécanique et des charges calculées, et commande les première et/ou seconde pompes (102, 104) pour optimiser la quantité de lubrifiant fournie au système d'exploitation de moteur (108) sur la base de la condition d'exploitation de moteur.

14. Procédé d'exploitation d'un système de lubrification (100) dans un moteur à turbine à gaz (20) comprenant les étapes :
de fourniture d'un premier arbre de moteur (40) configuré pour tourner à une première vitesse, d'un second arbre de moteur (50) configuré pour tourner à une seconde vitesse qui est plus rapide que la première vitesse, d'une première pompe (102) configurée pour être entraînée par le premier arbre (40) et d'une seconde pompe (104) configurée pour être entraînée par le second arbre (50) ; et
de distribution de lubrifiant à un système d'exploitation de moteur (108) par l'intermédiaire des première et seconde pompes (102, 104) fournissant ledit lubrifiant en optimisant les capacités des première et seconde pompes (102, 104) pour minimiser une quantité de lubrifiant fournie au système d'exploitation de moteur (108) sur la base des première et seconde vitesses associées.
